(19) Europäisches Patentamt
European Patent Office
Office européen des brevets

(11) Veröffentlichungsnummer: **0 607 123 B1**

(12) **EUROPÄISCHE PATENTSCHRIFT**

(45) Veröffentlichungstag der Patentschrift: **26.07.95**

(51) Int. Cl.[6]: **C22B 3/00**, C01G 55/00

(21) Anmeldenummer: **91911845.5**

(22) Anmeldetag: **26.06.91**

(86) Internationale Anmeldenummer:
**PCT/EP91/01193**

(87) Internationale Veröffentlichungsnummer:
**WO 92/01819 (06.02.92 92/04)**

# (54) VERFAHREN ZUR SOLVENTEXTRAKTION VON PALLADIUM AUS WÄSSRIGEN LÖSUNGEN.

(30) Priorität: **14.07.90 DE 4022472**

(43) Veröffentlichungstag der Anmeldung:
**27.07.94 Patentblatt 94/30**

(45) Bekanntmachung des Hinweises auf die Patenterteilung:
**26.07.95 Patentblatt 95/30**

(84) Benannte Vertragsstaaten:
**BE CH DE FR GB IT LI NL**

(56) Entgegenhaltungen:
**EP-A- 0 057 797**
**EP-A- 0 112 617**
**EP-A- 0 332 314**

(73) Patentinhaber: **ZENECA LIMITED**
**15 Stanhope Gate**
**London W1Y 6LN (GB)**

(72) Erfinder: **SCHUMACHER, Oliver**
**Nibelungenring 2**
**D-4712 Werne (DE)**

(74) Vertreter: **Pugsley, Roger Graham et al**
**Intellectual Property Group**
**Zeneca Specialties**
**P.O. Box 42**
**Hexagon House**
**Blackley**
**Manchester M9 8ZS (GB)**

EP 0 607 123 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Solventextraktion von Palladium aus wässrigen Lösungen, welche Nitrationen enthalten und wobei als Extraktionsmittel Pyridin-3,5-dicarbonsäure-diester verwendet werden.

Es ist bekannt, daß Palladium aus wässrigen Lösungen per Solventextraktion entfernt und gewonnen werden kann. Die gemäß dem Stand der Technik üblicherweise verwendeten Solventextraktionsmittel, z. B. Dialkylsulfide verfügen über eine mangelhafte Oxydationsbeständigkeit und können deshalb in oxydierendem Milieu (z.B. in salpetersauren Lösungen) nicht verwendet werden; Dialkylsulfide leiden zudem unter schlechter Extraktionskinetik.

Die EP-A-0 332 314 beschreibt die Solventextraktion von Palladium aus wässrigen Lösungen von Palladiumsalzen, welche obligat Halogenid- oder Pseudohalogenidanionen enthalten, mit einer Lösung einer heterocyclischen Verbindung in einem mit Wasser nicht mischbaren Lösungsmittel, welche wenigstens einen Ringsubstituenten vom Typen -COX trägt, wobei X eine Alkoxygruppe mit wenigstens 5 Kohlenstoffatomen ist. Die heterocyclische Ringverbindung kann dabei ein Pyridin- mono-, di- oder tri-carboxylsäureester, z.B. ein Diester der Pyridin-3,5-dicarbonsäure sein. Palladium wird dabei aus der Halogenid- oder Pseudohalogenidanionen enthaltenden wässrigen Lösung in die mit Wasser nicht mischbare Lösung extrahiert, während die meisten anderen Metalle in der wässrigen Lösung verbleiben. Falls Kupfer anwesend ist, wird es in großem Umfang mitextrahiert und muß in einem separaten Schritt abgetrennt werden. Das Palladium wird aus der mit Wasser nicht mischbaren Lösung mit einer wässrigen Lösung (strip solution) extrahiert.

Überraschend wurde nun gefunden, daß es möglich ist, Palladium aus Lösungen, die frei von Halogenid- und Pseudohalogenidanionen sind, mittels dieser heterocyclischen Verbindungen zu extrahieren. In Gegensatz zu der in EP-A-0 332 314 gegebenen Lehre "the process of the present invention is believed to proceed by the formation of a complex, for example a halogeno complex, between the palladium, or copper, salt and the substituted heterocyclic compound" kann mit Hilfe des erfindungsgemäßen Verfahrens daher auch in Abwesenheit von Halogenid- oder Pseudohalogenidanionen gearbeitet werden. Die Extraktionsgeschwindigkeit ist dabei hoch, die Palladium-Extraktion erfolgt nahezu quantitativ und mit hoher Selektivität gegenüber den meisten anderen Metallen; Kupfer wird nicht oder nur in sehr geringen Mengen mitextrahiert.

Die hierzu verwendeten Solventextraktionsmittel werden in EP-B-0 057 797 beschrieben.

Es zeigte sich weiterhin, daß die in EP-B-0 057 797 beschriebenen Pyridin-3,5-Dicarbonsäure-diester sich durch eine hohe Oxydationsstabilität auszeichnen und dadurch für den Einsatz in einem oxydierenden Milieu, wie z.B. salpetersauren Nitratlösungen geeignet sind.

Die Erfindung betrifft somit ein Verfahren zur Solventextraktion von Palladium aus wässrigen Lösungen von Palladiumsalzen, welche frei sind von Halogenid- und Pseudohalogenidionen, bestehend aus folgenden Schritten:

(1) Kontaktieren der wässrigen, Nitrationen enthaltenden Palladiumsalzlösung mit einer Lösung des Extraktionsmittels in einem mit Wasser nicht mischbaren organischen Lösungsmittel;

(2) Trennung der wässrigen Lösung von der Lösung des Extraktionsmittels in dem mit Wasser nicht mischbaren organischen Lösungsmittel, in welche das Palladium extrahiert worden ist;

(3) gegebenenfalls einer Wäsche der resultierenden organischen Phase mit Wasser oder verdünnten Säuren zur Entfernung von eventuell in geringen Mengen mitextrahierten Begleitmetallen;

(4) kontaktieren der resultierenden organischen Phase mit einer wässrigen Striplösung, wobei das Palladium in die wässrige Striplösung übergeht;

(5) Trennung der wässrigen Striplösung, in welche das Palladium übergegangen ist, von der Lösung des Extraktionsmittels in dem mit Wasser nicht mischbaren organischen Lösungsmittel;

(6) gegebenenfalls einer weiteren Wäsche der resultierenden organischen Phase mit Wasser, verdünnten wässrigen Lösungen oder verdünnten Säuren vor dem erneuten Einsatz.

wobei als Extraktionsmittel Pyridincarbonsäureesuer der allgemeinen Formel (1)

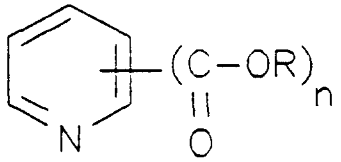

(1)

verwendet werden, worin n = 1 bis 3 ist und R gleiche oder verschiedene Kohlenwasserstoffreste mit 5 - 36 C-Atomen sind und wobei die Summe der Kohlenstoffatome aller R zwischen 16 bis 36 liegt.

Ein weiterer Gegenstand der Erfindung betrifft ein Verfahren zur Solventextraktion aus wässrigen Nitrationen enthaltenden und halogenidionenfreien Lösungen, wobei als Extraktionsmittel Pyridin-3,5-dicarbonssäure-diester der allgemeinen Formel (2)

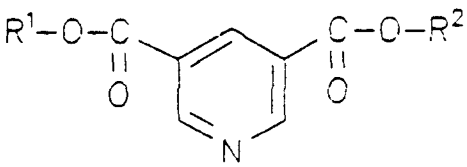

(2)

verwendet werden, worin $R^1$ und $R^2$ gleiche oder verschiedene, gegebenenfalls verzweigtkettige oder gemischte isomere Alkylgruppen mit 5 bis 36 Kohlenstoffatomen sind.

Weitere Gegenstände der Erfindung sind durch die Ansprüche gekennzeichnet.

Die Variationsbreite der Kettenlänge der einzelnen R ist relativ groß und wird durch die technischen Anforderungen an die Extraktionsmittel begrenzt. Diese bestehen außer der Selektivität und einer ausreichenden Extraktionskapazität im wesentlichen daraus, daß die Ester einmal eine genügende Hydrophobie (Wasserunlöslichkeit) aufweisen und die Viskositäten in den üblichen Anwendungskonzentrationen genügend gering sind, um den Anforderungen der jeweiligen Verfahrensvarianten zu entsprechen.

Dies ist im allgemeinen dann der Fall, wenn die Summe der Kohlenstoffatome aller R zwischen 16 - 36 liegt, wobei vorzugsweise die Einzelwerte bei n = 2 oder 3 eine Zahl von 5, insbesondere jedoch 8 C-Atomen pro R nicht unterschreiten sollten.

Bevorzugt werden Verbindungen, in welchen verzweigte Kohlenwasserstoffreste mit 8 bis 24, insbesondere 9 - 13 C-Atomen sind wie die gegebenenfalls gemischten isomeren 2-Ethylhexyl-, Octyl-, Nonyl-, Decyl-, Tridecyl-Reste.

Im erfindungsgemäßen Verfahren werden ganz besonders die Verbindungen bevorzugt, worin $R^1$ und $R^2$ gleich sind und aus gemischten isomeren Nonyl- und gemischten isomeren Isodecyl-Resten bestehen wie der Pyridin-3,5-dicarbonsäure-diisononylester und der Pyridin-3,5-dicarbonsäure-di-isodecylester.

Das Verfahren eignet sich besonders für die Solventextraktion von Palladium aus wässrigen Lösungen von Palladiumsalzen, welche Nitrationen enthalten und frei sind von Halogenid- und Pseudohalogenidanionen.

Das Verfahren eignet sich überraschend auch für die Palladiumextraktion aus salpetersauren Silbernitratlösungen, welche frei sind von Halogenid- und Pseudohalogenidionen, wie sie z.B. bei der elektrolytischen Silberraffination anfallen.

Die elektrolytische Silberraffination nach dem Möbiusverfahren oder verwandten Verfahren, bei welchen Rohsilber in einem salpetersauren AgNO3/NaNO3-Elektrolyten aufgelöst und kathodisch wieder abgeschieden wird, ist zur Raffination von Rohsilber weitverbreitet. Während der Elektroraffination reichern sich Begleitmetalle wie Cu und Pd im Silberelektrolyten an. Wenn die Pd-Konzentration einen kritischen wert überschreitet, wird dadurch die Silberqualität beeinträchtigt. Die Elektrolyse muß dann abgebrochen und der Elektrolyt aufgearbeitet werden. Die Aufarbeitung kann konventionell so erfolgen, daß die nitrathaltige Lösung eingedampft und danach die Metallnitrate in einer sogenannten "Schwarzschmelze" stufenweise thermisch zersetzt werden.

Nachteile dieses Vorgehens sind eine relativ lange Kapitalbindungszeit der Edelmetalle, die Entwicklung großer Mengen giftiger nitroser Gase und der relativ hohe Energiebedarf.

Das erfindungsgemäße Verfahren überwindet diese Nachteile.

Die Palladiumentfernung aus salpetersauren Silberelektrolyten mit Hilfe des erfindungsgemäßen Solventextraktionsverfahren kann so durchgeführt werden, daß ständig ein Teilstrom des palladiumhaltigen Elektrolyten dem Elektroysebad entnommen, von Palladium befreit und wieder in den Prozeß zurückgeführt wird. Alternativ kann die Elektrolyse auch bis zum Erreichen der kritischen Palladiumkonzentration betrieben und dann abgebrochen werden, der Elektrolyt dann in toto von Palladium befreit und die so erhaltene im wesentlichen palladiumfreie salpetersaure Silbernitratlösung wieder zur Elektrolyse eingesetzt werden.

Das Solventextraktionsverfahren selbst beinhaltet folgende Teilschritte:

(1) Kontaktieren der wässrigen, Nitrationen enthaltenden Palladiumsalzlösung mit einer Lösung des Extraktionsmittels in einem mit Wasser nicht mischbaren organischen Lösungsmittel, gegebenenfalls unter Mitverwendung von langkettigen aliphatischen oder araliphatischen Alkoholen als sogenanntem

"Modifier" zur Verbesserung der Phasentrennung;

(2) Trennung der wässrigen Lösung von der Lösung des Extraktionsmittels in dem mit Wasser nicht mischbaren organischen Lösungsmittel, in welche das Palladium extrahiert worden ist;

(3) gegebenenfalls einer Wäsche der resultierenden organischen Phase mit Wasser oder verdünnten Säuren, bevorzugt verdünnter Salpetersäure, zur Entfernung von eventuell in geringen Mengen mitextrahierten Begleitmetallen;

(4) kontaktieren der resultierenden organischen Phase mit einer wässrigen Striplösung, wobei das Palladium in die wässrige Striplösung übergeht, z. B. mit Thioharnstofflösungen oder mit verdünnten Lösungen von Alkalihydroxiden, bevorzugt aber mit verdünnter wässriger Ammoniaklösung;

(5) Trennung der wässrigen Striplösung, in welche das Palladium übergegangen ist, von der Lösung des Extraktionsmittels in dem mit Wasser nicht mischbaren organischen Lösungsmittel;

(6) gegebenenfalls Wäsche der resultierenden weitgehend palladiumfreien, organischen Phase mit Wasser, verdünnten wässrigen Lösungen oder verdünnten Säuren, bevorzugt verdünnter Salpetersäure, zur Entfernung von aus der Striplösung verschleppten Fremdsubstanzen.

Die als Extraktionsmittel verwendeten Pyridin-3,5-dicarbonsäure-diester können in Konzentrationen von 0,1 bis 2 mol/l, bevorzugt in Konzentrationen von 0,2 bis 0,8 mol/l, besonders bevorzugt in Konzentrationen von ca. 0,2 bis 0,3 mol/l gelöst in mit Wasser nicht mischbaren organischen Lösungs- bzw. Verdünnungsmitteln eingesetzt werden (diese Lösungen werden im folgenden "die organische Phase" genannt).

Beispiele für geeignete Lösungsmittel sind aliphatische, aromatische und araliphatische Kohlenwasserstoffe, chlorierte Kohlenwasserstoffe oder Mischungen solcher Lösungsmittel. In der hydrometallurgischen Praxis sind besonders bevorzugt Kohlenwasserstoffgemische wie hochsiedende Erdölfraktionen (z.B. Kerosin) mit hohem Flammpunkt und verschiedenen Aromatengehalten, wie sie z.B. unter den Namen ESCAID$^R$, SOLVESSO$^R$ (Warenzeichen der ESSO) oder SHELLSOL$^R$ (Warenzeichen der SHELL) käuflich erhältlich sind. Im erfindungsgemäßen Verfahren zeigten Lösungsmittel mit mittleren Aromatengehalten (wie z.B. SHELLSOL$^R$ 2046) im allgemeinen ein besseres hydrometallurgisches Verhalten, z.B. bessere Phasentrennungen, als solche mit besonders niedrigen (z.B. SHELLSOL$^R$ EC 707) oder besonders hohen (z.B. SOLVESSO$^R$ 150) Aromatengehalten.

Je nach Beschaffenheit der sauren, Nitrationen enthaltenden Palladiumsalzlösung kann gegebenenfalls der Zusatz sogenannter "Modifier" zu der organischen Phase vorteilhaft sein. Geeignete "Modifier" sind z. B. wasserunlösliche aliphatische oder araliphatische, gegebenenfalls verzweigte Alkohole, z. B. Isodecanol, Isotridecanol oder Nonylphenol. Solche "Modifier" können zur Verbesserung der Trennungen der organischen Phasen von den wässrigen Phasen beitragen, beim erfindungsgemäßen Verfahren können sie jedoch auch die Reextraktion des Palladiums aus der organischen Phase leicht beeinträchtigen. In der Regel wird ein solcher Zusatz jedoch nicht notwendig sein.

Der gesamte Extraktionsprozeß (Stufen 1 - 6) kann nach den auf diesem Gebiet allgemein bekannten Verfahren durchgeführt werden.

Die Extraktion (1) wird zweckmäßigerweise jedoch so ausgeführt, daß die wässrige, Nitratanionen enthaltende Palladiumsalzlösung (im folgenden "der Feed" genannt) mit der organischen Phase in einem Mischgefäß (dem sogenannten "Mixer") innig miteinander vermischt wird. Phasenverhältnisse von 0,1 - 20 Volumenteilen wässriger Feed je 1 Volumenteil organischer Phase sind sinnvoll, bevorzugt sind solche von 1 - 10 : 1. Das jeweils optimale Phasenverhältnis läßt sich für einen gegebenen Fall aus der Forderung herleiten, daß je Mol zu extrahierendes Palladium wenigstens etwa 2 Mole des Extraktionsmittels vorhanden sein sollen. Die Kontaktzeiten können 0,5 - 30 Minuten, bevorzugt 2 Minuten betragen.

Zur Trennung (2) der wässrigen Lösung von der mit Palladium beladenen organischen Phase läßt man die Phasen in einem Absitzgefäß (dem sogenannten "Settler") absitzen. Im allgemeinen sind die Phasentrennungen, auch bei allen im folgenden beschriebenen Operationen, schnell und vollständig. Gegebenenfalls können sie durch physikalische Koaleszenzhilfen, sogenannten "Koaleszern" verbessert werden, indem man die Gemische aus wässrigen und organischen Phasen durch z.B. Glaswolle oder gelochte Siebplatten leitet.

Eine Wäsche (3) der mit Palladium beladenen organischen Phase ist im allgemeinen nicht erforderlich, kann aber zur Entfernung der geringen Mengen an mitextrahierten Begleitmetallen vorgenommen werden. Dadurch läßt sich die Reinheit des Palladiums erhöhen und Störungen in den folgenden Verfahrensschritten vermeiden.

Die Wäsche kann mit Wasser oder verdünnten Säuren, insbesondere Mineralsäuren, bevorzugt verdünnter Salpetersäure erfolgen. Die Verwendung verdünnter Säuren empfiehlt sich besonders dann, wenn die mitextrahierten Begleitmetalle bei Erhöhung des pH-Wertes zur Ausfällung infolge von Hydrolyse neigen.

Phasenverhältnisse von 0,5 - 2, bevorzugt 0,5 Volumenteilen Waschlösung je 1 Volumenteil organischer Phase und Kontaktzeiten von 1 - 10 Minuten, bevorzugt 2 - 5 Minuten, haben sich als ausreichend erwiesen. Die Wäsche kann in einer Stufe erfolgen oder gegebenenfalls mehrmals wiederholt werden, in der Regel ist jedoch eine einmalige Wäsche ausreichend.

Die Reextraktion (das Strippen) (4) erfolgt durch inniges Mischen der resultierenden mit Palladium beladenen organischen Phase mit einer wässrigen Striplösung in einem Mischgefäß, wie oben unter (1) beschrieben. Dabei geht das Palladium in die wässrige Striplösung über.

Als Striplösungen eignen sich beispielsweise verdünnte Thioharnstofflösungen, verdünnte wässrige Lösungen von Alkalihydroxyden, und insbesondere verdünnte wässrige Ammoniaklösungen. Bevorzugt sind verdünnte wässrige Ammoniaklösungen mit Gehalten von 1 - 4 % $NH_3$ (z.B. 1 normale $NH_3$); höhere $NH_3$-Konzentrationen verbessern zwar die Reextraktion des Palladiums, tragen jedoch zur Verschlechterung der Phasentrennung bei. Zur vollständigeren Palladiumreextraktion empfiehlt es sich, die Reextraktion in mehreren Stufen, bevorzugt in 2 - 4 Stufen durchzuführen, wobei die wässrige Phase jeweils mit frischer wässriger Striplösung kontaktiert wird. Kontaktzeiten von 1 - 10 Minuten, bevorzugt 2 - 5 Minuten sind im allgemeinen ausreichend. Phasenverhältnisse von 0,5 - 2 Volumenteilen, bevorzugt 1 Volumenteil wässriger Striplösung je 1 Volumenteil organischer Phase haben sich als ausreichend erwiesen.

Für die Trennung (5) der mit Palladium beladenen Striplösung von der im organischen Phase gilt (im wesentlichen) das oben unter (2) Gesagte.

Eine nochmalige Wäsche (6) der im wesentlichen palladiumfreien organischen Phase vor ihrem erneuten Einsatz für die Palladiumextraktion ist immer dann anzuraten, wenn in den zu behandelnden Feed keine Fremdsubstanzen aus den wässrigen Striplösungen (z.B. $NH_3$ oder Thioharnstoff) verschleppt werden dürfen Dies ist z.B. bei salpetersauren Silbernitratelektrolyten aus der Silberraffination der Fall.

Als Waschflüssigkeiten eignen sich Wasser oder verdünnte wässrige Lösungen, für die Entfernung von $NH_3$ besser verdünnte Säuren, bevorzugt verdünnte Salpetersäure.

Die Wäsche kann in einer oder mehreren Stufen erfolgen, in der Regel ist jedoch eine einmalige Wäsche ausreichend.

Die einzelnen Schritte des Verfahrens können bei Temperaturen bis 60° C, bevorzugt jedoch bei Raumtemperatur, durchgeführt werden.

## Beispiele

### Herstellung des Pyridin-3,5-dicarbonsäure-di-isodecylesters (Beispiel 11 EP-A-0 057 797)

In einem Dreihalskolben, ausgerüstet mit Rührer, Thermometer, Tropftrichter und Rückflußkühler wurde eine Mischung aus 83,6 g Pyridin-3,5-dicarbonsäure, 1,25 g Dimethylformamid und 50 g Toluol unter gutem Rühren auf 80 °C aufgeheizt und dann 131 g Thionylchlorid innerhalb von 1 Stunde zugetropft. Nach Beendigung der Zugabe wurde noch 4 Stunden bei 80 - 82 °C nachreagiert. Der Überschuß an Thionylchlorid wurde abdestilliert, 158,3 g Isodecanol (handelsübliches Produkt der ICI Petrochemical Division) bei 80 - 85 °C innerhalb von 30 Minuten zugegeben und die Reaktionsmischung bei dieser Temperatur 2 Stunden intensiv gerührt. Danach wurde auf Raumtemperatur abgekühlt und die Mischung wurde nacheinander mit 400 ml einer 20 %igen wässrigen NaOH-Lösung, 1 M Salzsäure, 0,5 M Salzsäure und Wasser gewaschen und anschließend noch mit Aktivkohle (ca. 8 Gew.-% bezogen auf Reaktionsprodukt) behandelt. Nachdem das Toluol unter vermindertem Druck entfernt war, wurde der Rückstand bei 0,1 mbar und 200 - 210 °C destilliert. Die Reinheit des Produktes betrug 97 %.

### Herstellung der Extraktionslösung

Durch Auflösen von Pyridin-3,5-dicarboxylsäure-diisodecylester in SHELLSOL$^R$ 2046 (eine Erdölfraktion mit ca. 16 % Aromatenanteil) wurde eine organische Lösung mit einer Konzentration von 111,5 g Pyridin-3,5-dicarboxylsäure-diisodecylester je Liter, entsprechend ca. 0.25 Mol je Liter, hergestellt. Der Ester war hergestellt worden gemäß dem beschriebenen Verfahren. Diese organische Lösung wurde in den folgenden Beispielen verwendet.

### Beispiel 1

Dieses Beispiel zeigt die Extraktion von Palladium aus einer salpetersauren Lösung.

30 ml einer wässrigen Palladiumsalzlösung, enthaltend 10,96 g/l $Pd^{2+}$ (entsprechend 0,103 Mol/l) und 0,1 N $HNO_3$ sowie 10 ml der Extraktionslösung werden in ein Mischgefäß gefüllt. Die Lösungen werden bei

Raumtemperatur für 30 Minuten miteinander gemischt. Nach Beendigung des Mischvorgangs werden die Phasen voneinander getrennt und die Palladiumaufnahme der organischen Phase in Anlehnung an DIN 38406 Teil 22 bestimmt.

Die Aufnahme beträgt 12,9 g Palladium je Liter organischer Extraktionsmittellösung, entsprechend einer Kapazität von 116 g Pd je Kg des Extraktionsmittels. Je Mol eingesetztes Extraktionsmittel wurden also ca. 0,49 Mol Pd extrahiert.

Beispiel 2

Dieses Beispiel zeigt die Stabilität der verwendeten Extraktionsmittel in einer salpetersauren Nitratlösung.

100 ml einer wässrigen Lösung, enthaltend 0,1 N $HNO_3$ und 0,5 N $NaNO_3$ sowie 100 ml der Extraktionslösung wurden in ein Mischgefäß gefüllt und bei Raumtemperatur miteinander vermischt. Nach 2 Tagen wird der Mischvorgang unterbrochen, die Phasen voneinander getrennt und der organischen Phase eine Probe entnommen. Dann wird der Mischvorgang für weitere 22 Tage fortgesetzt; danach erfolgt eine weitere Probennahme. Die Palladiumkapazität der nach 2 bzw. 24 Tagen entnommen Proben organischer Phase wird bestimmt, wie in Beispiel 1 beschrieben.

Während des Meßzeitraums zeigte sich keine Abnahme der Kapazität des Extraktionsmittel:

| Tage | Palladiumkapazität | |
|---|---|---|
| | g Pd/l organischer Phase | g Pd/kg Extraktionsmittel |
| 0 | 13 | 117 |
| 2 | 14 | 126 |
| 24 | 15 | 134 |

Beispiel 3

Dieses Beispiel zeigt die selektive Extraktion von Palladium aus einer salpetersauren Silbernitratlösung.

50 ml Extraktionslösung und 150 ml einer wässrigen salpetersauren Silbernitratlösung, enthaltend 99±2 g/l $Ag^+$, 2,2 g/l $Pd^{2+}$, und ca. 15 g/l $HNO_3$ wurden in einem Mischgefäß bei Raumtemperatur 30 Minuten miteinander gemischt. Danach wurden die Phasen getrennt und die Metallgehalte der wässrigen Phase erneut gemessen. In der wässrigen Phase befanden sich noch 100±2 g/l Ag und 16 ppm Pd.

Das Palladium ist also nahezu quantitativ extrahiert worden, bei einer hohen Selektivität gegenüber Ag.

Beispiel 4

Dieses Beispiel zeigt die selektive Extraktion von Palladium aus einem gebrauchten salpetersauren Silberelektrolyten aus der Silberraffination.

200 ml Extraktionslösung und 1200 ml eines gebrauchten salpetersauren Silberelektrolyten aus der Silberraffination mit einem $HNO_3$-Gehalt von ca. 13,8 g/l, wurden in einem Mischgefäß bei Raumtemperatur miteinander gemischt. Nach 2 Minuten wurde der Mischvorgang unterbrochen und der wässrigen Phase eine Probe entnommen. Danach wurde für 3 Minuten weitergemischt und der Mischvorgang nach insgesamt 5 Minuten beendet. Die Phasen wurden getrennt und die Metallgehalte der wässrigen Phasen vor und nach der Extraktion verglichen.

| Metallgehalte der wässrigen Phasen | | | |
|---|---|---|---|
| Metall | vor der Extraktion | nach 2 Minuten | nach 5 Minuten |
| Pd | 1,4 g/l | 8 ppm | 8 ppm |
| Ag | 49±2 g/l | 48±2 g/l | 51±2 g/l |
| Cu | 47±2 g/l | 46±2 g/l | 46±2 g/l |
| Pb | 1,1 g/l | 1,1 g/l | 1,1 g/l |
| Ni | 1,7 g/l | | |
| Cd | 1,9 g/l | | |
| Zn | 2,1 g/l | | |

Das Palladium ist also schon nach 2 Minuten praktisch quantitativ extrahiert worden, bei einer hohen Selektivität gegenüber Ag, Cu und Pb.

Beispiel 5

Dieses Beispiel zeigt die Wiedergewinnung von Palladium aus einer mit Palladium beladenen Extraktionsmittelphase.

(a) Wäsche: 200 ml der mit Palladium beladenen organischen Phase aus Beispiel 4, enthaltend ca. 8,4 g/l Pd, wurden in einem Mischgefäß mit 100 ml 0,22 N $HNO_3$ bei Raumtemperatur 2 Minuten gemischt. Die Phasen wurden getrennt und die Metallgehalte der wässrigen Phase bestimmt.

(b) Reextraktion: Die gewaschene organische Phase (200 ml) und 200 ml 1N $NH_3$ als wässrige Striplösung wurden 5 Minuten bei Raumtemperatur in einem Mischgefäß vermischt, danach wurde die wässrige Phase abgetrennt und ihre Metallgehalte bestimmt. Diese Prozedur wurde noch 2 mal mit frischer 1 N $NH_3$ wiederholt.

| Metallgehalte der wässrigen Phasen (in ppm) | | | | |
|---|---|---|---|---|
| Metall | Wäsche | Reextraktion | | |
| | | 1.Stufe | 2.Stufe | 3.Stufe |
| Ag | 285 | 2 | < 1 | < 1 |
| Pb | < 1 | 4 | < 1 | < 1 |
| Pd | < 1 | 6500 | 1100 | 146 |
| Cu | 0,7 | < 0,2 | < 0,2 | < 0,2 |
| Ni | < 1 | < 1 | < 1 | < 1 |
| Cd | < 1 | < 1 | < 1 | < 1 |
| Zn | < 1 | < 1 | < 1 | < 1 |

Das entspricht einer Palladiumreextraktion von ca. 77,7 % nach der ersten, 90,8 % nach der zweiten und 92,6 % nach der dritten Stufe. Das Palladium wird in hoher Reinheit gewonnen.

Beispiel 6

200 ml der aus Beispiel 5 resultierenden, weitgehend von Palladium befreiten organische Phase wurden, wie in Beispiel 5 beschrieben, mit 200 ml 0,22 N $HNO_3$ gewaschen. Die Waschprozedur wurde wiederholt, bis in der Waschlösung keine Ammoniumionen mehr nachzuweisen waren.

Dann wurde, wie in Beispiel 4 beschrieben, die Extraktion aus weiteren 1200 ml des gebrauchten salpetersauren Silberelektrolyten aus der Silberraffination wiederholt. Der Pd-Gehalt der wässrigen Phase wurde dabei von 1,4 g/l auf 7 ppm gesenkt.

200 ml der resultierenden, erneut mit ca. 8,4 g/l Palladium beladenen organischen Phase wurden mit 100 ml 0,22 N $HNO_3$ wie in Beispiel 5 beschrieben, gewaschen.

Die gewaschene organische Phase wurde geteilt. Je 40 ml der mit Palladium beladenen organische Phase wurden 5 Minuten bei Raumtemperatur mit folgenden wässrigen Striplösungen in einem Mischgefäß vermischt: (a) 40 ml 1 N NaOH, (b) 40 ml 5 N NH3, (c) 500 ml 0,1 N Thioharnstofflösung in 0,2 N HCl. Danach wurden die Phasen getrennt und die Metallgehalte der wässrigen Phasen sowie die Palladiumreextraktion in Anlehnung an DIN 38406 Teil 22 bestimmt.

| Striplösung | Pd-Gehalt der Striplösungen | Pd-Reextraktion |
|---|---|---|
| 1 N NaOH | 0,58 g/l | 7 % |
| 5 N $NH_3$ | 5,6 g/l | 67 % |
| 0,1 N Thioharnstoff gelöst in 0,2 N HCl | 0,48 g/l | 71 % |

## Patentansprüche

1. Verfahren zur Solventextraktion von Palladium aus wässrigen Lösungen von Palladiumsalzen, welche Nitrationen enthalten und frei sind von Halogenid- und Pseudohalogenidionen, bestehend aus folgenden Schritten:
   (1) kontaktieren der wässrigen, Palladiumsalze enthaltenden Lösung mit einer Lösung eines Extraktionsmittels in einem mit Wasser nicht mischbaren organischen Lösungsmittel;
   (2) Trennung der wässrigen Lösung von der Lösung des Extraktionsmittels in dem mit Wasser nicht mischbaren organischen Lösungsmittel, in welche das Palladium extrahiert worden ist;
   (3) kontaktieren der resultierenden organischen Phase mit einer wässrigen Striplösung wobei das Palladium in die wässrige Striplösung übergeht;
   (4) Trennung der wässrigen Striplösung, in welche das Palladium übergegangen ist von der Lösung des Extraktionsmittels in dem mit Wasser nicht mischbaren organischen Lösungsmittel;
   wobei als Extraktionsmittel Pyridincarbonsäureester der allgemeinen Formel (1)

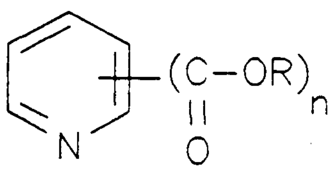

(1)

   verwendet werden, worin n = 1 bis 3 ist und R gleiche oder verschiedene Kohlenwasserstoffreste mit 5 - 36 C-Atomen sind und wobei die Summe der Kohlenstoffatome aller R zwischen 16 bis 36 liegt.

2. Verfahren gemäß Anspruch 1, wobei als Extraktionsmittel Pyridin-3,5-dicarbonssäure-diester der allgemeinen Formel (2)

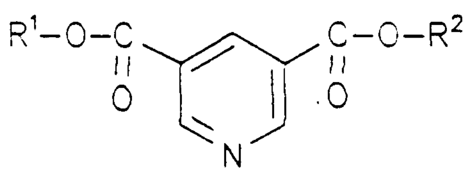

(2)

   verwendet werden, worin $R^1$ und $R^2$ gleiche oder verschiedene, gegebenenfalls verzweigtkettige oder gemischte isomere Alkylgruppen mit 5 bis 36 Kohlenstoffatomen sind.

3. Ein Verfahren gemäß Anspruch 2, wobei als Pyridin-3,5-dicarbonsäure-diester Pyridin-3,5-dicarbonsäure-diisodecylester verwendet wird.

4. Verfahren gemäß den Ansprüchen 1 bis 3, wobei der Lösung des Extraktionsmittels in einem mit Wasser nicht mischbaren organischen Lösungsmittel außerdem wasserunlösliche, gegebenenfalls verzweigte aliphatische oder araliphatische Alkohole mit 8 - 15 Kohlenstoffatomen als sogenannte "Modifier" zugesetzt werden.

5. Verfahren gemäß den Ansprüchen 1 - 4, wobei als wässrige Striplösung in Schritt (3) eine verdünnte wässrige Ammoniaklösung, eine verdünnte Alkalihydroxidlösung oder eine verdünnte Thioharnstofflösung verwendet wird.

6. Verfahren gemäß den Ansprüchen 1 - 5, wobei die wässrige Striplösung in Schritt (3) eine verdünnte wässrige Ammoniaklösung mit einem Gehalt von 1 - 4 % $NH_3$ ist.

7. Verfahren gemäß den Ansprüchen 1 - 6, wobei die aus Schritt (2) resultierende, Palladium enthaltende organischen Phase einer Wäsche mit Wasser oder verdünnten Säuren zur Entfernung von evtl. mitextrahierten Begleitmetallen unterworfen wird.

8. Verfahren gemäß den Ansprüchen 1 - 7, wobei die aus Schritt (4) resultierende organische Phase vor ihrer erneuten Verwendung für Schritt (1) mit Wasser, verdünnten wässrigen Lösungen oder verdünnten Säuren gewaschen wird.

9. Verfahren gemäß den Ansprüchen 7 und 8, wobei als Waschflüssigkeit Salpetersäure verwendet wird.

10. Verfahren nach Anspruch 1 zur Solventextraktion von Palladium aus salpetersauren Silbernitratlösungen.

## Claims

1. Process for the solvent extraction of palladium from aqueous solutions of palladium salts containing nitrate ions and free from halide and pseudohalide ions, comprising the following steps:
   (1) contacting the aqueous, palladium salt solution with a solution of an extraction agent in a water-immiscible organic solvent;
   (2) separating the aqueous solution from the solution of the extraction agent in the water-immiscible organic solvent into which the palladium has been extracted;
   (3) contacting the resulting organic phase with an aqueous strip solution, the palladium transferring into the aqueous strip solution;
   (4) separating the aqueous strip solution, into which the palladium has transferred, from the solution of the extraction agent in the water-immiscible organic solvent;

   wherein the extraction agent is a pyridinecarboxylic ester of the general formula (1)

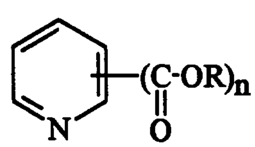

(1)

in which n = 1 to 3 and the groups represented by R are identical or different hydrocarbon radicals having 5 - 36 C atoms and where the sum of the carbon atoms of all the groups represented by R is between 16 and 36.

2. A process according to claim 1, wherein the extraction agent is a pyridine-3,5-dicarboxylic ester of the general formula (2)

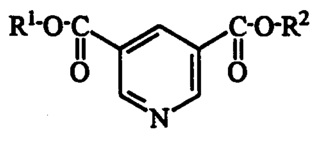

(2)

in which $R^1$ and $R^2$ are identical or different unbranched or branched-chain or mixed isomeric alkyl groups having 5 to 36 carbon atoms.

3. A process according to claim 2, wherein the pyridine-3,5-dicarboxylic diester is diisodecyl pyridine-3,5-dicarboxylate.

4. A process according to claims 1 to 3, wherein water-insoluble, unbranched or branched aliphatic or araliphatic alcohols having 8-15 carbon atoms are further added as so-called "modifiers" to the solution

of the extraction agent in a water-immiscible organic solvent.

**5.** A process according to claims 1-4, wherein the aqueous strip solution used in Step (3) is a dilute aqueous ammonia solution, a dilute alkali metal hydroxide solution or a dilute thiourea solution.

**6.** A process according to claims 1-5, wherein the aqueous strip solution used in Step (3) is a dilute aqueous ammonia solution having a content of 1 - 4 % of $NH_3$.

**7.** A process according to claims 1-6, wherein the palladium-containing organic phase resulting from Step (2) is subjected to a washing with water or dilute acids to remove any co-extracted metals.

**8.** A process according to claims 1-7, wherein the organic phase resulting from Step (4) is washed with water, dilute aqueous solutions or dilute acids prior to its re-use in Step (1).

**9.** A process according to claims 7 and 8, wherein the washing liquid used is nitric acid.

**10.** Process according to claim 1 for the solvent extraction of palladium from silver nitrate solutions acidified by nitric acid.

## Revendications

**1.** Procédé d'extraction au solvant du palladium de solutions aqueuses de sels de palladium qui contiennent des ions nitrate et qui sont dépourvus d'ions halogénure et pseudohalogénure, comprenant les étapes suivantes :

(1) mise en contact de la solution aqueuse contenant des sels de palladium avec une solution d'un agent d'extraction dans un solvant organique non miscible à l'eau ;

(2) séparation de la solution aqueuse de la solution d'agent d'extraction dans le solvant organique non miscible à l'eau, dans laquelle le palladium a été extrait ;

(3) mise en contact de la phase organique résultante avec une solution aqueuse de strippage, ce qui fait passer le palladium dans la solution aqueuse de strippage ;

(4) séparation de la solution aqueuse de strippage, dans laquelle le palladium a été transféré, de la solution de l'agent d'extraction dans le solvant organique non miscible à l'eau ;

dans lequel on utilise comme agent d'extraction des esters d'acide pyridine-carboxylique de formule générale (1)

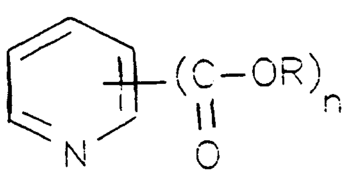

(1)

dans laquelle n a une valeur de 1 à 3 et R désigne des restes hydrocarbonés identiques ou différents ayant 5 à 36 atomes de carbone, la somme des atomes de carbone de tous les restes R étant comprise entre 16 et 36.

**2.** Procédé suivant la revendication 1, dans lequel on utilise comme agent d'extraction un diester d'acide pyridine-3,5-dicarboxylique de formule générale (2)

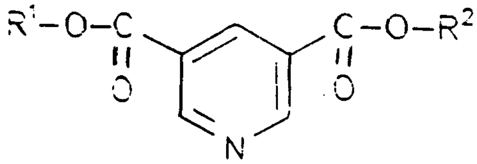

(2)

dans laquelle $R^1$ et $R^2$ représentent des groupes alkyle identiques ou différents, le cas échéant à chaîne ramifiée ou isomères mixtes, ayant 5 à 36 atomes de carbone.

**3.** Procédé suivant la revendication 2, dans lequel on utilise comme diester d'acide pyrldine-3,4-dicarboxylique l'ester diisodécylique de l'acidee pyridine-3,5-dicarboxylique.

**4.** Procédé suivant les revendications 1 à 3, dans lequel on ajoute en outre comme agents dits "modificateurs" à la solution de l'agent d'extraction dans un solvant organique non miscible à l'eau, des alcools aliphatiques ou araliphatiques insolubles dans l'eau, éventuellement ramifiés, ayant 8 à 15 atomes de carbone.

**5.** Procédé suivant les revendications 1 à 4, dans lequel on utilise comme solution aqueuse de strippage dans l'étape (3) une solution aqueuse diluée d'ammoniac, une solution diluée d'hydroxyde alcalin ou une solution diluée de thiourée.

**6.** Procédé suivant les revendications 1 à 5, dans lequel la solution aqueuse de strippage dans l'étape (3) est une solution aqueuse diluée d'ammoniac ayant une teneur en $NH_3$ de 1 à 4 %.

**7.** Procédé suivant les revendications 1 à 6, dans lequel la phase organique résultant de l'étape (2), contenant le palladium, est soumise à un lavage à l'eau ou avec des acides dilués afin d'éliminer les métaux d'accompagnement qui ont été éventuellement extraits en même temps.

**8.** Procédé suivant les revendications 1 à 7, dans lequel la phase organique résultant de l'étape (4) est lavée à l'eau, avec des solutions aqueuses diluées ou avec des acides dilués avant sa réutilisation dans l'étape (1).

**9.** Procédé suivant les revendications 7 et 8, dans lequel on utilise l'acide nitrique comme liquide de lavage.

**10.** Procédé suivant la revendication 1, pour l'extraction au solvant de palladium de solutions nitriques de nitrate d'argent.